# EUROPEAN PATENT APPLICATION

(11) **EP 1 097 913 A1**
(43) Date of publication of application: **09.05.2001**
(21) Application number: 00203884.2
(22) Date of filing: 07.11.2000
(51) Int. Cl.: C05F 9/00, C05F 3/00, C05F 1/00

(54) **Method for processing organic residues into a fertilizer**

(30) Priority: 08.11.1999 NL 1013525
(71) Applicant: N.V. Regionale Afvalverwerkingsmaatschappij Zuid-Oost-Brabant, 5674 TE Nuenen (NL)
(72) Inventor: Kusters, Henricus Wilhelmus Martinus, 5673 TV Nuenen (NL); v/d Boomen, Henricus Nicolaas Cornelis, 5421 CN Gemert (NL); Kaskens, Henricus Joseph Maria, 5492 CD St. Oedenrode (NL)
(74) Representative: Van kan, Johan Joseph Hubert, Ir.

(57) **Abstract**

A method for processing organic residues into a usable fertilizer, wherein the organic residues of different origin are pretreated, analysed and stored individually, after which the organic residues thus treated are combined according to a specific ratio to form a mixture, after which a homogenisation step, a composting step and a pasteurisation step are carried out with a view to obtaining the usable fertilizer.

## Description

The present invention relates to a method for processing organic residues into a usable fertilizer.

A method of this kind is known from European patent application no. 0 952 129, which document relates to a process for obtaining organic fertilizer from any type of animal excrement. The process comprises the use of a rotary horizontal dehydrator, to which the organic starting material to be dehydrated is introduced, which product originates from a homogenizer, wherein the product is mixed with the already dehydrated product and/or other organic products in order to thus give the product texture and the desired characteristics. Specific data as regards texture and characteristics are not provided, let alone data with regard to the preliminary individual analysis of the various residues.

US patent no. 5,853,450 relates to a method of composting greenwaste, wherein the greenwaste to be composted is mixed with a mixture of waste water sludge, the pH of which has been adjusted to a specific level, as a result of which said composting of the greenwaste will take place quickly. A chemical analysis of the individual residue flows with a view to preparing a tailor-made fertilizer via homogenisation, composting and pasteurisation steps is not provided.

French patent application no. 2546161 relates to a method of preparing fertilizer wherein a solution of bacteria-spores-vitamins is brought into contact with a pulverized mixture of organic materials, after which aerobic fermentation at a pH of about 8 is carried out. Although said reference uses a specific starting material consisting of a number of different organic residues, it does not disclose any specific measures for obtaining a fertilizer that has been tailor-made for the specific use.

German Offenlegungsschrift no. 24 52 316 relates to a method of composting sludge, in which document is mentioned that such a sludge flow may be comprised of several sub-flows. It is furthermore mentioned in said document that it is desirable in order for a biological process to take place that a qualitatively balanced substrate be added. Furthermore it is not possible to derive from said publication a method of obtaining a tailor-made, usable fertilizer suitable for the specific use by means of a biological process.

The method referred to in the introduction is known per se from US patent no. 4,743,287, wherein a humic acid fertilizer is produced. The method disclosed therein comprises the use of a low humic acid organic material as the starting material, the organic material of which material is subsequently analysed in order to determine the composition of nitrogen, phosphate, potash and sulfur therein. If one or more of the measured values is lower than a predetermined value, this deficiency is met by adding trace amounts of such elements. A measured quantity of water is added to the organic material composition thus obtained to produce a moisture content of 12-30% by weight, after which the mixture is transferred to a reactor. The process that takes place in the reactor is precisely controlled, with an acidic material being added to reduce the pH of the mixture, resulting in hydrolysis of the mixture and an increase in temperature and pressure within said reactor. After the acidic phase a measured quantity of a base material is added to the mixture, wherein the quantity of base material is so selected that the pH of the mixture corresponds to that of the final fertilizer, Finally, the reactor is maintained under specific pressure and temperature conditions for a predetermined period of time to assist in hydrolysis of the mixture to form within the mixture a new molecular structure including molecular clusters of inorganic chemicals that surround larger humic acid molecules. The drawback of such a method is that the control of the process within the reactor is very critical. Moreover, relatively expensive trace amounts are needed to eliminate the lack of essential elements, such as nitrogen, phosphate, potash and sulphur, which has a negative effect on the cost price of the final fertilizer.

The method referred to in the introduction is also known from WO 98/15506, wherein a compost having a balanced composition of nitrogen, phosphate and potash is obtained by mixing into the non-combusted manure an amount of combusted manure. The heat produced upon combustion of the manure can be used for drying the non-combusted manure. One drawback of this method is that the manure to be combusted must have a high dry matter content, because otherwise the combustion thereof will be problematic. In addition, a costly, corrosion resistant incinerator is required because harmful, acidic gases are developed during the combustion process.

The object of the present invention is to provide a method for processing organic residues into a usable fertilizer, which method eliminates the drawbacks of the prior art.

Another object of the present invention is to provide a method for processing organic residues into a usable fertilizer, which method provides a fertilizer that can be adapted to the user's requirements, in particular as regards the respective percentages of nutrients.

Yet another object of the present invention is to provide a method for processing organic residues into a usable fertilizer, which method employs widely available organic residues of different origin.

Another object of the present invention is furthermore to provide a usable fertilizer having a balanced nutrients content, so that the fertilizer requirement per hectare for the intended use of the fertilizer can be kept as low as possible, wherein the fertilizer requirement imposed by the crop and the soil conditions is met practically exactly.

According to the present invention the method referred to in the introduction is characterized in that the organic residues of different origin are pretreated, chemically analysed and stored individually, wherein the chemical analysis of the organic residues of different origin comprises the determining of one or more parameters from the group consisting of dry matter, organic matter, nitrogen, phosphate, potash and magnesium, after which the organic residues thus treated are combined according to a specific ratio to form a mixture, wherein the combining of the organic residues of different origin takes place on the basis of the obtained analysis results, after which the mixture thus formed is subjected to a homogenisation step, a composting step and a pasteurisation step with a view to obtaining the usable fertilizer.

Since the organic residues are individually pretreated, analysed and stored, the composition and the amount of each residue are known exactly. By combining the organic residues of different origin according to a specific ratio, it is possible to obtain finally a fertilizer that has a nutrients content that can be varied as desired within certain bounds. According to the present invention it is thus possible to control the final percentages of nutrients in the fertilizer. Since the fertilizers used in horticulture and arable farming,for example, differ from each other in practice as regards their composition, it is possible, by suitably selecting the mixing ratio of the organic residues of different origin, to prepare a fertilizer which meets the specific requirements that are made of the particular intended use of that fertilizer, for example in horticulture or arable farming. Since a tailor-made organic fertilizer is obtained, the risk of excessive concentrations of nutrients being administered to the soil, which risk constitutes a negative characteristic of the prior art fertilizers, is eliminated when using the present fertilizer.

According to the present invention the analysis of the organic residues of different origin following the pretreatment step is performed to determine one or more parameters from the group consisting of dry matter, organic matter, nitrogen, phosphate, potash and magnesium. The above parameters enable characterization of the desired fertilizer, so that the organic residues of different origin, which are mixed in a specific ratio and which are subsequently treated, can lead to the intended "tailor-made" fertilizer.

In the method according to the present invention it is preferred to carry out a drying step following the homogenisation, composting and pasteurisation steps, wherein the material obtained after the drying step is in particular pelletized.

The fertilizer that has been pelletized following the drying step is in particular suitable for being stored in bags or other containers for transport. Moreover, the storage life of such a fertilizer will have been extended considerably, because the remaining moisture has in practice appeared to be an ideal breeding ground for bacteria, fungi and the like, which has an adverse effect on the quality of the fertilizer.

Furthermore it is in particular preferable with the present method that the homogenisation step, which takes place after the organic residues of different origin have been individually pretreated, analysed, stored and combined, is carried out for a period of at least 10 hours at a temperature of 60 - 70 °C. During such a homogenisation step the harmful elements present in the fertilizers, such as certain fungi and bacteria, are killed.

In certain embodiments of the present method it is preferable to add an amount of bacteria to the mixture that has been formed according to particular ratio. Such bacteria are in particular important for carrying out the composting step. The addition of a certain amount of bacteria can be carried out by means of an inoculant, a material rich in bacteria or a certain amount of material obtained from a previous composting step.

Since the composition of the starting material being supplied generally varies, it is preferable to reduce the organic residues of different origin to a fraction of < 10 mm. Moreover it is desirable to remove any non-organic components therefrom, for example by screening or by means of a magnetic separation device. A fraction of < 10 mm is in particular desirable with a view to obtaining a satisfactory mutual homogenisation of the organic residues of different origin.

According to the present invention residues selected from the group consisting of garden and kitchen waste or compost, products obtained from reprocessed animal waste, animal manure, greenwaste from parks, waste from mushroom culture, greenhouse culture, arable farming and the plant processing industry are preferably used as suitable organic residues of different origin.

According to the method of the present invention it is thus possible to prepare a "tailor-made" fertilizer in that the organic residues of different origin are individually pretreated, analysed and stored, after which the organic residues thus treated are combined according to a specific ratio to form a mixture, after which a homogenisation step, a composting step and a pasteurisation step are carried out.

## Claims

1. A method for processing organic residues into a usable fertilizer, characterized in that the organic residues of different origin are pretreated, chemically analysed and stored individually, wherein the chemical analysis of the organic residues of different origin comprises the determining of one or more parameters from the group consisting of dry matter, organic matter, nitrogen, phosphate, potash and magnesium, after which the organic residues thus treated are combined according to a specific ratio to form a mixture, wherein the combining of the organic residues of different origin takes place on the basis of the obtained analysis results, after which the mixture thus formed is subjected to a homogenisation step, a composting step and a pasteurisation step with a view to obtaining the usable fertilizer.

2. A method according to claim 1, characterized in that bacteria are added to the mixture that has been formed according to a specific ratio.

3. A method according to claim 1, characterized in that a drying step takes place following the homogenisation, composting and pasteurisation steps.

4. A method according to claim 3, characterized in that the material obtained after the drying step is pelletized.

5. A method according to claims 1 - 4, characterized in that the homogenisation step is carried out for a period of at least 10 hours at a temperature of 60 - 70 °C.

6. A method according to claims 1 - 5, characterized in that said pretreatment step comprises the step of reducing the organic residue to a fraction of < 10 mm.

7. A method according to claims 1 - 6, characterized in that the organic residues of different origin are selected from the group consisting of garden and kitchen waste or compost, products obtained from reprocessed animal waste, animal manure, greenwaste from parks, waste from mushroom culture, greenhouse culture, arable farming and the plant processing industry.
